# EUROPÄISCHE PATENTSCHRIFT

(11) **EP 1 762 377 B1**
(45) Veröffentlichungstag und Bekanntmachung des Hinweises auf die Patenterteilung: **06.08.2008**
(21) Anmeldenummer: 05405525.6
(22) Anmeldetag: 07.09.2005
(51) Int. Cl.: B32B 23/06, B32B 15/12, B32B 15/08, B05D 1/30

(54) **Verfahren zur Herstellung eines Laminates**
A method for the preparation of a laminate
Procédé pour la fabrication d'un produit laminé

(43) Veröffentlichungstag der Anmeldung: 14.03.2007
(73) Patentinhaber: Alcan Technology & Management Ltd., 8212 Neuhausen am Rheinfall (CH)
(72) Erfinder: Nägeli, Hans R., 8212 Neuhausen am Rheinfall (CH)

(56) Entgegenhaltungen:
- EP-A- 0 318 771
- EP-A- 0 423 511
- EP-A- 1 416 088
- WO-A-99/46121
- US-A- 4 791 004

## Beschreibung

Die Erfindung betrifft ein Verfahren zur Herstellung eines Laminates aus wenigstens zwei über wenigstens eine mittels eines Katalysators beschleunigt aushärtende Klebstoffschicht miteinander verbundenen folienförmigen Substraten.

Eines der grössten Probleme der Verpackungsindustrie ist die lange Aushärtungszeit der heute am häufigsten verwendeten Klebstoffsysteme auf der Basis von Polyurethan. Es ist schon erfolglos versucht worden, dieses Problem mittels eines in den zu verklebenden Kunststofffilm eingearbeiteten oder auf eine der zu verklebenden Bahnen aufgesprühten Katalysators zu lösen.

Zur Herstellung mehrschichtiger fotografischer Filme und Papiere wird seit Jahrzehnten ein unter dem Begriff "Curtain Coating" oder "Vorhangguss" bekannt gewordenes Flüssigfilm-Beschichtungsverfahren eingesetzt. Bei diesem Beschichtungsverfahren werden gleichzeitig mehrere Schichten aus einer Schlitzdüse in einem frei fallenden Vorhang auf eine laufende Materialbahn aufgetragen.

Es ist auch schon vorgeschlagen worden, die Vorhanggusstechnologie zur Beschichtung von Papier und zur Herstellung von Kunststoffverbundmaterialien einzusetzen.

In der WO-A-0154828 ist ein Verfahren zur Herstellung eines mehrschichtigen Verpackungslaminates mit wenigstens zwei übereinander liegenden Schichten offenbart, bei welchem Verfahren zwei oder mehr Schichten mittels Vorhangguss auf ein Substrat aus einem gegebenenfalls bereits beschichteten Papier, Karton oder Kunststofffilm flüssig aufgetragen und nachfolgend getrocknet werden. Die Flüssigfilm-Beschichtungen umfassen Klebstoffschichten, Barriereschichten, Zwischenschichten als Abstandshalter, Sauerstoff-Scavenger-Schichten und Heisssiegelschichten.

Aus der US-B-6 845 599 ist ein zur Vorhanggusstechnologie alternatives Flüssigfilm-Beschichtungsverfahren unter der Bezeichnung "Slide Coating", nachfolgend "Gleitbeschichtung" genannt, bekannt. Bei diesem Beschichtungsverfahren werden gleichzeitig mehrere Schichten aus einer Schlitzdüse von einer Düsengleitfläche direkt auf ein an der Ablaufkante der Düsengleitfläche vorbeigeführtes Substrat aufgetragen.

Der Erfindung liegt die Aufgabe zugrunde, ein Verfahren der eingangs genannten Art zu schaffen, mit welchem die Nachteile einer reduzierten Topfzeit sowie die schwierige Handhabung des Katalysators eliminiert werden können.

Zur erfindungsgemässen Lösung der Aufgabe führt, dass ein erstes Substrat über eine Flüssigfilm-Beschichtung mittels Vorhangguss oder Gleitbeschichtung mit einem dreischichtigen, zwei Klebstoffschichten und eine zwischen den Klebstoffschichten angeordnete, einen Katalysator enthaltende Zwischenschicht umfassenden Flüssigfilm beschichtet und nachfolgend mit dem zweiten Substrat verbunden wird.

Das auf dies Weise entstandene Laminat kann über wenigstens eine weitere Flüssigfilm-Beschichtung mittels Vorhangguss oder Gleitbeschichtung mit einem weiteren dreischichtigen, zwei Klebstoffschichten und eine zwischen den Klebstoffschichten angeordnete, einen Katalysator enthaltende Zwischenschicht umfassenden Flüssigfilm beschichtet und nachfolgend mit wenigstens einem weiteren Substrat zu einem weiteren Laminat verbunden werden.

Durch den Einbau des Katalysators in die Zwischenschicht kommen die beiden Klebstoffschichten erst nach dem Austritt der Zwischenschicht aus der Düsenanordnung mit dem Katalysator in Berührung. Die Nachteile einer reduzierten Topfzeit und schwierigen Handhabung werden mit der Anwendung des erfindungsgemässen Verfahrens eliminiert, und die Aushärtezeit der Klebstoffsysteme, insbesondere jene auf der Basis von Urethanbasis, kann drastisch reduziert werden.

Jede der Klebstoffschichten ist auf die Oberfläche des jeweils angrenzenden Substrats funktionell optimiert. Die spezifisch auf ein bestimmtes Substrat angepassten Klebstoffformulierungen sind oft kostspielige Produkte. Bevorzugt ist deshalb die Dicke der Klebstoffschichten geringer als die Dicke der Zwischenschicht. Die Dicke der Klebstoffschichten beträgt zweckmässigerweise etwa 1 bis 30 %, vorzugsweise 1 bis 10 %, der Dicke der Zwischenschicht.

Bevorzugt besteht die den Katalysator enthaltende Zwischenschicht aus einem kostengünstigen Material, wie z. B. ein Klebstoff auf Urethanbasis, insbesondere aus einem Standard Urethan-Klebstoff, wie z.B aromatische oder aliphatische Isocyanate. Ein geeigneter Katalysator ist beispielsweise Caprolactam.

Als Katalysatoren für Polyurethanklebstoffe können auch Lewis-Basen oder Lewis-Säuren, Alkalisalze organischer Säuren und Phenole sowie Kombinationen dieser und weiterer Katalysatoren eingesetzt werden. Eine Zusammenstellung möglicher Katalysatoren für Polyurethanklebstoffe ist beispielsweise der EP-A-0 586 843 zu entnehmen.

Die Klebstoffschichten können beispielsweise aus Klebstoffen auf Urethanbasis, beispielsweise Polyether-, Polyester- oder Polybutadienpolyole, Acrylat- oder Epoxybasis oder aus Kombinationen der genannten Klebstoffe zusammengesetzt sein.

Die Schichten des Flüssigfilms können lösemittelbasiert, lösemittelfrei oder wasserbasiert sein. Lösemittelfreie Beschichtungsfluide werden bevorzugt, da bei diesen der übliche Trocknungsschritt entfällt.

Als Substrate können Kunststofffilme aus beispielsweise Polyethylenterephthalat (PET), Polyethylen (PP), Polypropylen (PP), Polyamid (PA), Metallfolien, wie z. B. Aluminiumfolien, gegebenenfalls mit einem Barrierematerial aus beispielsweise SiOₓ beschichtet, Papier oder eine Kombination aus wenigstens zwei der vorstehend genannten Materialien eingesetzt werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt schematisch in
- Fig. 1 den Verfahrensablauf bei der Verbindung von jeweils zwei Substraten mittels Vorhangguss im Querschnitt;
- Fig. 2 einen Querschnitt durch ein Detail von Fig. 1 nach deren Linie I-I;
- Fig. 3 einen Querschnitt durch ein Detail von Fig. 1 nach deren Linie II-II;
- Fig. 4 einen Querschnitt durch ein Detail von Fig. 1 nach deren Linie III-III;
- Fig. 5 einen Querschnitt durch ein Detail von Fig. 1 nach deren Linie IV-IV;
- Fig. 6 das zum Vorhangguss von Fig. 1 alternative Gleitbeschichtungsverfahren im Querschnitt.

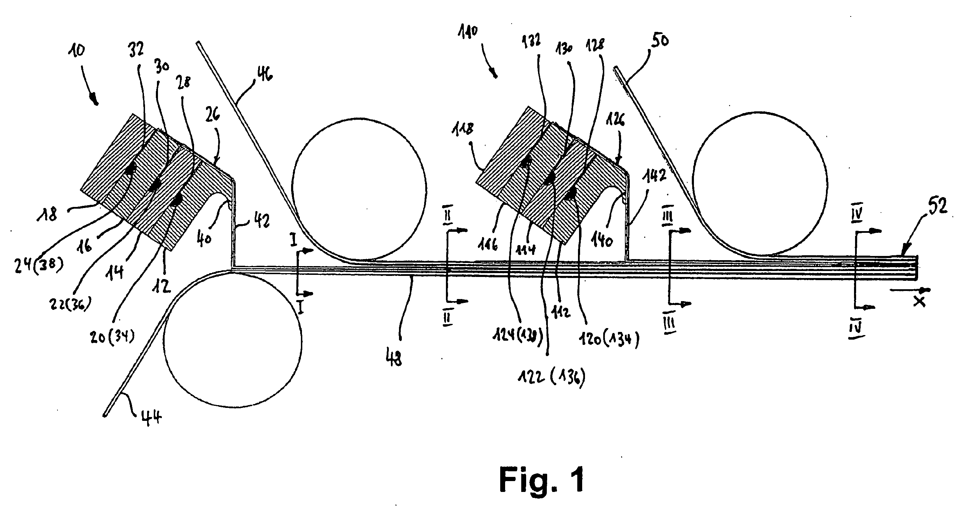

Eine in Fig. 1 gezeigte erste Düsenanordnung 10 einer nicht näher dargestellten Gleitflächen-Beschichtungsvorrichtung für eine Flüssigfilm-Beschichtung mittels Vorhangguss weist vier einander anliegende Module 12, 14, 16, 18 auf. Die aneinandergereihten Module 12, 14, 16, 18 bilden insgesamt drei quer zu einer Bahnlaufrichtung x angeordnete Verteilkammern 20, 22, 24 mit je einem an einer Düsengleitfläche 26 endenden Austrittsschlitz 28, 30, 32. Die Verteilkammern 20, 22, 24 werden entsprechend der gewünschten Austrittsmenge an der Düsengleitfläche 26 separat und dosiert mit Beschichtungsfluiden 34 (Klebstoff), 36 (Zwischenschicht), 38 (Klebstoff) versorgt.

Die aus den Verteilkammern 20, 22, 24 über die Austrittsschlitze 28, 30, 32 an der Düsengleitfläche 26 austretenden und in Schichten übereinandergelegten Beschichtungsfluide 34, 36, 38 laufen als dreischichtiger Flüssigkeitsfilm über eine am Modul 12 angeordnete Ablaufkante 40 und bilden einen frei fallenden Vorhang 42. Die mittlere Schicht aus dem Beschichtungsfluid 36 enthält einen Katalysator 37.

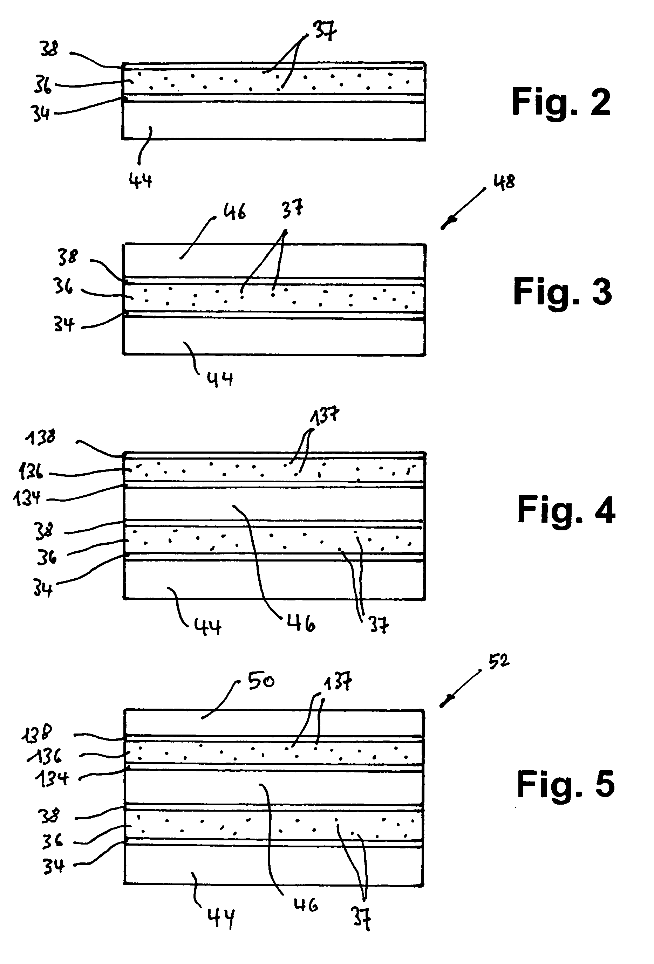

Der aus den Beschichtungsfluiden 34, 36, 38 aufgebaute dreischichtige Vorhang 42 trifft im wesentlichen senkrecht auf eine sich in Laufrichtung x bewegende erste Substratbahn 44 und bildet auf deren Oberfläche die in Fig. 2 gezeigte fluide Beschichtung.

Der mit den Beschichtungsfluiden 34, 36, 38 beschichteten ersten Substratbahn 44 wird in Bandlaufrichtung x eine zweite Substratbahn 46 zugeführt und mit der beschichteten ersten Substratbahn 44 zu einem in Fig. 3 gezeigten Laminat 48 verklebt.

In Linie mit der ersten Düsenanordnung 10 ist eine im Aufbau mit der ersten Düsenanordnung 10 identische zweite Düsenanordnung 110 zur weiteren Beschichtung des Laminates 48 angeordnet. Die zweite Düsenanordnung 110 weist vier einander anliegende Module 112, 114, 116, 118 auf. Die aneinandergereihten Module 112, 114, 116, 118 bilden insgesamt drei quer zur Bahnlaufrichtung x angeordnete Verteilkammern 120, 122, 124 mit je einem an einer Düsengleitfläche 126 endenden Austrittsschlitz 128, 130, 132. Die Verteilkammern 120, 122, 124 werden entsprechend der gewünschten Austrittsmenge an der Düsengleitfläche 126 separat und dosiert mit Beschichtungsfluiden 134 (Klebstoff), 136 (Zwischenschicht), 138 (Klebstoff) versorgt.

Die aus den Verteilkammern 120, 122, 124 über die Austrittsschlitze 128, 130, 132 an der Düsengleitfläche 126 austretenden und in Schichten übereinandergelegten Beschichtungsfluide 134, 136, 138 laufen als dreischichtiger Flüssigkeitsfilm über eine am Modul 112 angeordnete Ablaufkante 140 und bilden einen frei fallenden Vorhang 142. Die mittlere Schicht aus dem Beschichtungsfluid 136 enthält einen Katalysator 137.

Der aus den Beschichtungsfluiden 134, 136, 138 aufgebaute dreischichtige Vorhang 142 trifft im wesentlichen senkrecht auf das sich in Laufrichtung x bewegende erste Laminat 48 und bildet auf dessen Oberfläche die in Fig. 4 gezeigte fluide Beschichtung.

Dem mit den Beschichtungsfluiden 134, 136, 138 beschichteten Laminat 48 wird in Bandlaufrichtung x eine dritte Substratbahn 50 zugeführt und mit dem beschichteten Laminat 48 zu einem in Fig. 5 gezeigten weiteren Laminat 52 verklebt.

Mit dem in Fig. 1 dargestellten Verfahrensablauf kann z. B. ein Laminat zur Herstellung von sterilisierbaren Verpackungsbeuteln gefertigt werden. Ein derartiges Beutellaminat umfasst typischerweise einen dem dritten Substrat 50 entsprechenden äusseren, gegebenenfalls eine Barriereschicht aus SiOₓ aufweisenden Film aus Polyethylenterephthalat (PET), der mit einem weiteren Film aus orientiertem Polyamid (OPA) verklebt ist. Der dem zweiten Substrat 46 entsprechende OPA-Film ist über eine weitere Klebstoffschicht mit einer dem ersten Substrat 44 entsprechenden Siegelfilm aus Polypropylen (PP) verbunden. Bei der konventionellen Herstellung des PET/OPA/PP-Laminates 52 werden üblicherweise aliphatische Isocyanat-Kleber, deren Aushärtezeit bis zu 12 Tage betragen kann, eingesetzt. Mit der erfindungsgemässen Anwendung dreischichtiger Klebstoffsysteme mit Katalysator wird die Aushärtezeit auf einem Bruchteil der Aushärtezeiten herkömmlicher Klebstoffe reduziert. Die dreischichtigen Klebstoffsystem umfassen beispielsweise zwei aussenliegende Klebstoffschichten auf Urethanbasis und eine mittige Klebstoffschicht auf Urethanbasis mit Caprolactam als Katalysator.

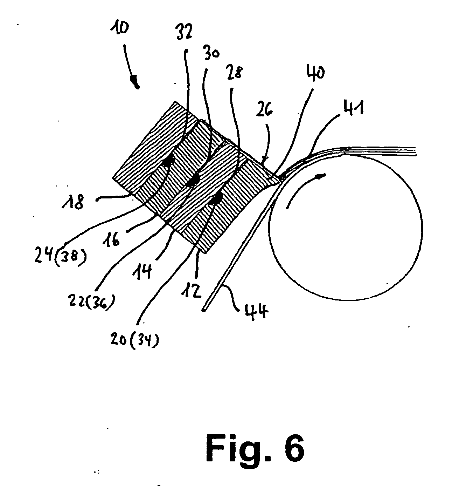

Fig. 6 zeigt eine Düsenanordnung 10 mit einem im wesentlichen gleichen Aufbau wie die Düsenanordnung von Fig. 1, wobei die Ablaufkante 40 zur Durchführung des Gleitbeschichtungsverfahrens angepasst ist. Der dreischichtige Flüssigkeitsfilm 41 gleitet hier von der Ablaufkante 40 direkt auf die an der Ablaufkante 40 vorbeigeführte Substratbahn 44.

## Patentansprüche

1. Verfahren zur Herstellung eines Laminates (48) aus wenigstens zwei über wenigstens eine mittels eines Katalysators beschleunigt aushärtende Klebstoffschicht miteinander verbundenen folienförmigen Substraten (44, 46),
**dadurch gekennzeichnet, dass**
ein erstes Substrat (44) über eine Flüssigfilm-Beschichtung mittels Vorhangguss oder Gleitbeschichtung mit einem dreischichtigen, zwei Klebstoffschichten (34, 38) und eine zwischen den Klebstoffschichten (34, 38) angeordnete, einen Katalysator (37) enthaltende Zwischenschicht (36) umfassenden Flüssigfilm beschichtet und nachfolgend mit dem zweiten Substrat (46) verbunden wird.

2. Verfahren nach Anspruch 1, **dadurch gekennzeichnet, dass** das Laminat (48) über wenigstens eine weitere Flüssigfilm-Beschichtung mittels Vorhangguss oder Gleitbeschichtung mit einem weiteren dreischichtigen, zwei Klebstoffschichten (134, 138) und eine zwischen den Klebstoffschichten (134, 138) angeordnete, einen Katalysator (137) enthaltende Zwischenschicht (136) umfassenden Flüssigfilm beschichtet und nachfolgend mit wenigstens einem weiteren Substrat (50) zu einem weiteren Laminat (52) verbunden wird.

3. Verfahren nach Anspruch 1 oder 2, **dadurch gekennzeichnet, dass** jede der Klebstoffschichten (34, 38; 134, 138) auf die Oberfläche des angrenzenden Substrats (44, 46; 48, 50)) funktionell optimiert ist und die Dicke der Klebstoffschichten (34, 38; 134, 138) 1 bis 30 %, vorzugsweise 1 bis 10 %, der Dicke der Zwischenschicht (36, 136) beträgt.

4. Verfahren nach einem der Ansprüche 1 bis 3, **dadurch gekennzeichnet, dass** die Klebstoffschichten (34, 38; 134, 138) aus Klebstoffen auf Urethanbasis, insbesondere Polyether-, Polyester- oder Polybutadienpolyole, Acrylat- oder Epoxybasis oder aus Kombinationen der genannten Klebstoffe aus Klebstoffen auf der Basis von Polyurethan (PUR) oder Acrylat zusammengesetzt sind.

5. Verfahren nach einem der Ansprüche 1 bis 4, **dadurch gekennzeichnet, dass** die Zwischenschicht (36, 136) aus einem Klebstoff auf Urethanbasis, insbesondere aus aromatischen oder aliphatischen Isocyanaten, besteht.

6. Verfahren nach einem der Ansprüche 1 bis 5, **dadurch gekennzeichnet, dass** der Katalysator (37, 137) in der Zwischenschicht (36, 136) aus Caprolactam besteht.

7. Verfahren nach einem der Ansprüche 1 bis 6, **dadurch gekennzeichnet, dass** die Schichten (34, 36, 38; 134, 136, 138) des Flüssigfilms lösemittelbasiert, lösemittelfrei oder wasserbasiert sind.

8. Verfahren nach einem der Ansprüche 1 bis 7, **dadurch gekennzeichnet, dass** die Substrate (44, 46,50) Kunststofffilme, Metallfolien, Papier oder eine Kombination aus wenigstens zwei der vorstehend genannten Materialien sind.

## Claims

1. Process for producing a laminate (48) from at least two film-like substrates (44, 46) joined to one another via at least one adhesive layer which cures in accelerated manner by means of a catalyst, **characterised in that** a first substrate (44) is coated via a liquid-film coating by means of curtain casting or sliding coating with a three-layered liquid film comprising two adhesive layers (34, 38) and an intermediate layer (36) containing a catalyst and arranged between the adhesive layers (34, 38) and then is joined to the second substrate (46).

2. Process according to claim 1, **characterised in that** the laminate (48) is coated via at least one further liquid-film coating by means of curtain casting or sliding coating with a further three-layered liquid film comprising two adhesive layers (134, 138) and an intermediate layer (136) containing a catalyst (137) and arranged between the adhesive layers (134, 138) and then is joined to at least one further substrate (50) to form a further laminate (52).

3. Process according to claim 1 or 2, **characterised in that** each of the adhesive layers (34, 38; 134, 138) is functionally optimised with respect to the surface of the adjacent substrate (44, 46; 48, 50) and the thickness of the adhesive layers (34, 38; 134, 138) is 1 to 30%, preferably 1 to 10%, of the thickness of the intermediate layer (36, 136).

4. Process according to one of claims 1 to 3, **characterised in that** the adhesive layers (34, 38; 134, 138) are composed of adhesives based on urethane, in particular polyether polyols, polyester polyols or polybutadiene polyols, based on acrylate or epoxy or of combinations of the said adhesives from adhesives based on polyurethane (PUR) or acrylate.

5. Process according to one of claims 1 to 4, **characterised in that** the intermediate layer (36, 136) consists of an adhesive based on urethane, in particular of aromatic or aliphatic isocyanates.

6. Process according to one of claims 1 to 5, **characterised in that** the catalyst (37, 137) in the intermediate layer (36, 136) consists of caprolactam.

7. Process according to one of claims 1 to 6, **characterised in that** the layers (34, 36, 38; 134, 136, 138) of liquid film are solvent-based, solvent-free or water-based.

8. Process according to one of claims 1 to 7, **characterised in that** the substrates (44, 46, 50) are plastic films, metal foils, paper or a combination of at least two of the above-mentioned materials.

## Revendications

1. Procédé pour la fabrication d'un élément stratifié (48) en au moins deux substrats (44, 46) sous forme de feuille reliés ou assemblés l'un à l'autre par au moins une couche d'adhésif durcissant de manière accélérée au moyen d'un catalyseur,
**caractérisé en ce qu'**un premier substrat (44) est revêtu par application de film liquide au moyen d'un processus de coulée en rideau ou de revêtement par glissement, avec un film liquide en trois couches comprenant deux couches d'adhésif (34, 38) et une couche intermédiaire (36) renfermant un catalyseur (37), agencée entre les deux couches d'adhésif (34, 38), et est ensuite relié ou assemblé au deuxième substrat (46).

2. Procédé selon la revendication 1, **caractérisé en ce que** l'élément stratifié (48) est revêtu par au moins une autre application de film liquide au moyen d'un processus de coulée en rideau ou de revêtement par glissement, avec un autre film liquide en trois couches comprenant deux couches d'adhésif (134, 138) et une couche intermédiaire (136) renfermant un catalyseur (137), agencée entre les deux couches d'adhésif (134, 138), et est ensuite relié ou assemblé à au moins un autre substrat (50) pour former un autre élément stratifié (52).

3. Procédé selon la revendication 1 ou 2, **caractérisé en ce que** chacune des couches d'adhésif (34, 38 ; 134, 138) est optimisée fonctionnellement par rapport à la surface du substrat adjacent (44, 46 ; 48, 50), et l'épaisseur des couches d'adhésif (34, 38 ; 134, 138) vaut de 1 à 30%, de préférence de 1 à 10% de l'épaisseur de la couche intermédiaire (36, 136).

4. Procédé selon l'une des revendications 1 à 3, **caractérisé en ce que** les couches d'adhésif (34, 38 ; 134, 138) sont composées d'adhésifs à base d'uréthanne, notamment des polyols de polyéther, polyester ou polybutadiène, à base d'acrylate ou d'époxy, ou de combinaisons des adhésifs cités d'adhésifs à base de polyuréthanne (PUR) ou d'acrylate.

5. Procédé selon l'une des revendications 1 à 4, **caractérisé en ce que** la couche intermédiaire (36, 136) est constituée d'un adhésif à base d'uréthanne, notamment des isocyanates aromatiques ou aliphatiques.

6. Procédé selon l'une des revendications 1 à 5, **caractérisé en ce que** le catalyseur (37, 137) dans la couche intermédiaire (36, 136) est constitué de caprolactame.

7. Procédé selon l'une des revendications 1 à 6, **caractérisé en ce que** les couches (34, 36, 38 ; 134, 136, 138) du film liquide sont à base de solvant, exemptes de solvant ou à base d'eau.

8. Procédé selon l'une des revendications 1 à 7, **caractérisé en ce que** les substrats (44, 46, 50) sont des films de matière plastique, des feuilles de métal, du papier ou une combinaison d'au moins deux des matériaux précédemment cités.
